# EUROPEAN PATENT APPLICATION

(11) **EP 4 756 558 A1**
(43) Date of publication of application: **10.06.2026**
(21) Application number: 24218169.1
(22) Date of filing: 06.12.2024
(51) Int. Cl.: G05D 1/606, B63H 25/00, G05D 107/00, G05D 109/30

(54) **PROACTIVE ENVIRONMENTAL DISTURBANCE REJECTION IN MARINE VESSELS**

(71) Applicant: ABB SCHWEIZ AG, 5400 Baden (CH)
(72) Inventor: RAHMAN, Moksadur, 72476 Västerås (SE); FEYZMAHDAVIAN, Hamid, 169 73 Stockholm (SE)
(74) Representative: Kransell & Wennborg KB

(57) **Abstract**

The present invention generally relates to a computer-implemented method for proactive environmental disturbance rejection in marine vessels (10), comprising: acquiring (S102) environmental disturbance data (28, 31, 33) from sensors (26, 30, 32), predicting (S104) environmental disturbance on the marine vessel from the environmental disturbance data and environmental disturbance models (19), calculating (S106) a physical impact on the marine vessel (10) when subject to the predicted environmental disturbance, determining (S108) proactive control actions for at least partly counteracting the calculated physical impact, providing (S110) the proactive control actions (C) to a propulsion system (12, 708) and/or a stabilization system (49, 710) of the marine vessel.

## Description

### Field of the Invention

The present invention generally relates to a computer-implemented method for proactive environmental disturbance rejection in marine vessels, to a control unit for executing the method, to a marine vessel comprising the control unit, and to a corresponding computer program product.

### Background

Marine vessels constantly face a wide range of environmental disturbances, including wind, waves, and ocean currents, all of which can have a significant impact on their stability, maneuverability, and overall operational efficiency. These disturbances can lead to unwanted deviations from intended paths, reduced fuel efficiency, and even safety hazards in extreme conditions. To address these challenges, stabilization systems and propulsion control strategies have been developed to mitigate the impact of such disturbances.

While the traditional solutions provide some level of compensation, they are often insufficient to fully counteract the negative effects of environmental forces, leading to delayed responses and suboptimal vessel performance. There is thus room for improvements with regards to environmental disturbance compensation for marine vessels.

### Summary

In view of the above-mentioned and other drawbacks of the prior art, it is an object of the present invention to provide a method for environmental disturbance rejection for marine vessels that at least partly alleviates the drawbacks of prior art.

According to a first aspect of the invention, there is provided a computer-implemented method for proactive environmental disturbance rejection in marine vessels, comprising: acquiring environmental disturbance data from sensors, predicting environmental disturbance on the marine vessel from the environmental disturbance data and environmental disturbance models, calculating a physical impact on the marine vessel when subject to the predicted environmental disturbance, determining proactive control actions for at least partly counteracting the calculated physical impact, and providing the proactive control actions to a propulsion system and/or a stabilization system of the marine vessel.

The present invention is at least partly based on the realization to enable proactive control of a vessel, allowing for early counteraction of disturbances to improve stability and maneuverability in various environmental conditions. The present invention provides predictive disturbance estimation such that proactive control actions can be determined and delivered in a feedforward manner to counteract the incoming anticipated environmental disturbance.

The environmental disturbance data may be acquired by on-board sensors or by onshore or offshore weather stations that send the data to the marine vessel. The marine vessel may thus be equipped with on-board sensors such as Radar and Lidar for measuring environmental disturbances.

The physical impact on the marine vessel may be calculated using a ship model, and different models for wind, current and wave impact on the marine vessel.

The marine vessel may be travelling from a start position and destination position and data thereof may be acquired, for example using GNSS (global navigation satellite system) or GPS (global positioning system) position data indicating the start position and destination position.

In embodiments, the method may further comprise determining a present state of the marine vessel, determining a magnitude and timing of the physical impact, wherein the proactive control actions are determined based on the present state of the vessel in relation to the magnitude and timing of the physical impact. The present state includes for example position and motion of the marine vessel, and may further include the heading angle, surge velocity, sway velocity, and yaw rate of the marine vessel. Advantageously, this allows for precise control adjustments based on the current dynamic state of the vessel, enhancing responsiveness and ensuring appropriate control actions are taken at the correct moment.

In embodiments, the proactive control actions may be provided to the propulsion system and/or the stabilization system of the marine vessel as feedforward control actions. In other words, the proactive control actions are fed to the propulsion system and/or the stabilization system before the environmental disturbance has hit the marine vessel. Feedforward control advantageously enables anticipatory action, reducing the impact of disturbances before they affect the vessel, leading to smoother operations and enhanced predictive control.

In embodiments, the method may comprise acquiring feedback sensing data from sensors indicating a physical impact on the marine vessel caused by environmental disturbance and adjusting control actions of the propulsion system and/or the stabilization system of the marine vessel based on the feedback sensing data. That is, the control actions may be based on feedforward control and be further adjusted using feedback control. Combining feedback control ensures continuous adjustments are made based on real-time disturbance effects, improving the vessel's ability to maintain stability.

In embodiments, the method may comprise determining the amount of thruster capacity that required for counteracting the calculated physical impact and providing an output indicating the remaining amount of available thruster capacity. This advantageously optimizes thruster usage by calculating the required capacity and informing operators of available capacity, thereby improving operational efficiency and decision-making for additional maneuvers.

In embodiments, the method may comprise acquiring operational objective data for the marine vessel and determining the proactive control actions such that an intended operational objective is at least partly maintained. The intended operational objective may be to follow a path or maintain in a present position. In other words, the marine vessel's performance can be optimized to maintain its path or operational goals despite environmental disturbances, thus ensuring higher mission success rates and operational continuity.

In embodiments, the method may comprise determining the present speed of the marine vessel, evaluating the time required to adjust a thrust vector in both magnitude and direction at the present speed for propulsion systems of the marine vessel, selecting the fastest propulsion system for executing the proactive control actions given the time required to adjust the thrust vector. Advantageously, this optimizes the control system by selecting the propulsion system that responds the fastest provided the time required to adjust the thrust vector, improving response times during disturbance rejection and enhancing vessel maneuverability. The fastest propulsion system may be selected based on thrust vector adjustment speed, energy efficiency, and response to the predicted environmental disturbance.

In embodiments, the proactive control actions may include altering rotational speed (RPM), angle (such as pod angle, yaw angle, blade pitch, etc), or other controllable factors of a thruster, fin stabilizer, or both, as part of the propulsion system and/or stabilization system. The control actions may include fine-tuning of control responses by adjusting parameters, such as RPM or pod angle, for more effective and efficient disturbance mitigation.

In embodiments, calculating the physical impact may include calculating forces and moments on the marine vessel. This allows for more accurate prediction and mitigation of disturbances, leading to improved vessel stability and operational efficiency.

In embodiments, the forces and moments may be calculated as at least surge, sway, heave, and roll on the marine vessel. By covering these critical degrees of freedom, a wide range of environmental impacts are covered, ensuring comprehensive vessel stabilization.

In embodiments, environmental disturbance includes one or more of wind, sea current, and waves.

According to a second aspect of the invention, there is provided a control unit configured to perform the steps of any one of the embodiments of the first aspect.

Further effects and features of the second aspect of the invention are largely analogous to those described above in connection with the first aspect of the invention.

According to a third aspect of the invention, there is provided a system for proactive environmental disturbance rejection in marine vessels, comprising: an environmental disturbance prediction module configured to predict environmental disturbance on the marine vessel from sensor data and environmental disturbance models, a physical impact calculation module configured to receive predict environmental disturbance data from the environmental disturbance prediction module, and to calculate a physical impact on the marine vessel when subject to the predicted environmental disturbance, a vessel motion and stability control module configured to receive data of the calculated physical impact from the physical impact calculation module as feedforward data, the vessel motion and stability control module being configured to determine proactive control actions for at least partly counteracting the calculated physical impact, and to provide the proactive control actions to a propulsion system and/or a stabilization system of the marine vessel.

The system integrates predictive, computational, and control functions, enabling a comprehensive and real-time solution for disturbance rejection, thereby improving the overall safety and operational efficiency of marine vessels.

Further effects and features of the third aspect of the invention are largely analogous to those described above in connection with the first aspect of the invention.

There is further provided a marine vessel comprising the control unit and/or the system.

According to a fourth aspect of the invention, there is provided a computer program product for performing the method described herein, when executed by a control unit.

The computer program product comprises program code for acquiring environmental disturbance data from sensors, predicting environmental disturbance on the marine vessel from the environmental disturbance data and environmental disturbance models, calculating a physical impact on the marine vessel when subject to the predicted environmental disturbance, determining proactive control actions for at least partly counteracting the calculated physical impact, providing the proactive control actions to a propulsion system and/or a stabilization system of the marine vessel.

Further effects and features of the fourth aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a marine vessel according to an embodiment of the invention;
Fig. 2 illustrates a marine vessel travelling at sea and being exposed to environmental disturbances;
Fig. 3 is a flow-chart of method steps according to embodiments of the present invention;
Fig. 4 is a flow-chart of method steps according to embodiments of the present invention;
Fig. 5 is a flow-chart of method steps according to embodiments of the present invention;
Fig. 6 is a flow-chart of method steps according to embodiments of the present invention; and
Fig. 7 is a block diagram of a system according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

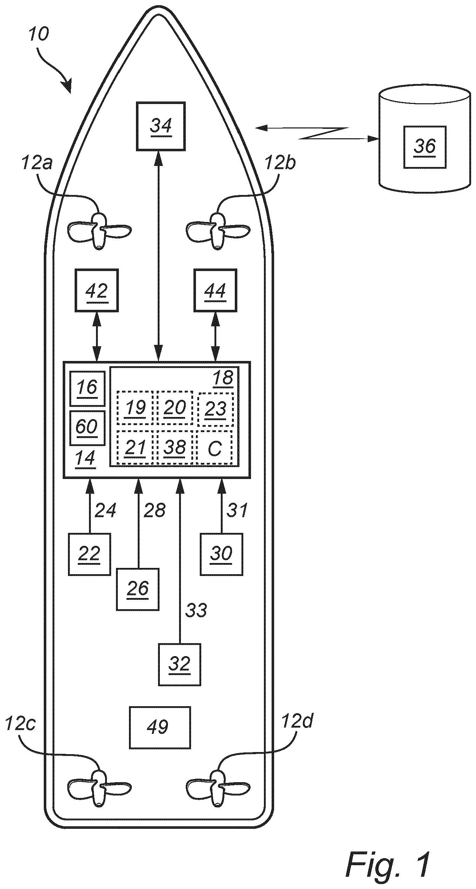

Fig. 1 schematically represents a top view of a marine vessel 10. The marine vessel 10 may for example be a ship or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 is rotatable in a horizontal plane (parallel with the drawing plane of Fig. 1) into different thrust directions. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters although other types of thrusters or propulsion types are also envisaged such as foil wheel propellers.

The vessel 10 further comprises a control system 14. The control system 14 of this example comprises a control unit 16 and a memory 18. The memory 18 has a computer program 20 stored thereon. The computer program 20 comprises program code which, when executed by the control unit 16, causes a data processing device, or control unit 16 to perform, or command performance of, various steps described herein.

As shown in Fig. 1, a model 21 of the vessel 10 may be stored in the memory 18. The model 21 may for example be a nonlinear model of the vessel 10 describing the motion of the vessel 10 in the horizontal plane. In addition, environmental disturbance models 19 are stored in the memory 18 to describe the impact from wind, current and wave on the marine vessel 10.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing map data to the control system 14. The marine vessel 10 may further have access to nautical charts 38 and map data 23 from the memory 18 or from the server 36.

The vessel 10 may further comprise environmental sensors 26, 30, 32 for detecting environmental disturbances and provide environmental disturbance data to the control system 14 such as wind strength and direction, sea current strength and direction, and wave conditions. Wind data 28 may be provided from the wind sensor 26 to the control system 14, sea current data 31 may be provided from the sea current sensor 30 to the control system 14, and wave condition data 33 such as wave height and frequency may be provided from the wave condition sensor 32 to the control system 14. Alternative or additionally, the control system 14 may receive wind data and/or sea current data remotely using wireless communication technology 34 from an onshore or offshore weather station 36 or server 36.

The sensors 26, 30, 32 may for example include cameras, Lidar, and Radar technology.

The vessel 10 further comprises a human-machine interface 42 configured to provide an output of proactive control actions, or outputs concerning predicted environmental disturbance. The human-machine interface may be a display 42 communicatively connected to the control unit 14. Furthermore, the marine vessel 10 may comprise an input device 44 configured to receive manual operator input and forward it to the control system 14. The input device 44 may be a joystick, a keyboard, a mouse, a touch screen, or a similar device which can be used for providing input to a computer.

When operating a marine vessel 10 along a path the control system 14 controls the thrusters 12 to propel the marine vessel 10 from a start position to a destination position. It is desirable to find a safe path that avoids collisions with obstacles, and that can react to environmental disturbances such as wind, waves and sea current.

The vessel 10 further includes a stabilization system 49 configured to ensure stability of the marine vessel to provide a safe and comfortable travel.

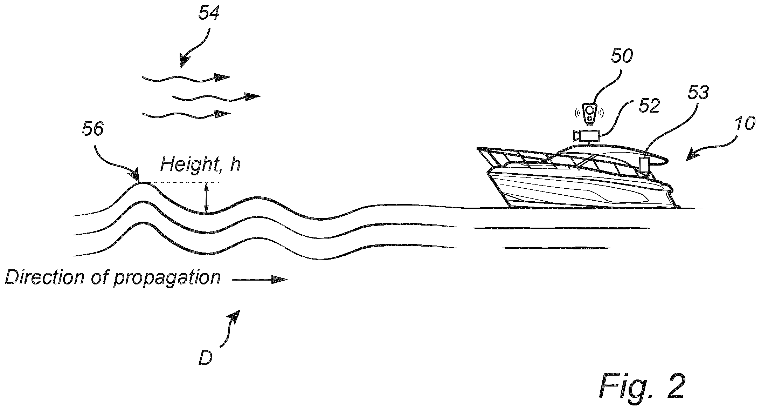

Fig. 2 illustrates a marine vessel 10 travelling at sea and equipped with a Lidar/Radar 50, a camera 52, and a wind sensor 53. The marine vessel 10 is exposed to wind gusts 54 which tend to quickly change both in speed and direction. The marine vessel 10 is exposed to waves 56 with a height h and velocity V in the propagation direction, D.

The camera 52, Lidar/Radar 50, and wind sensor 53 can detect and provide data indicating present wind and waves such that an upcoming environmental disturbance on the marine vessel 10 can be predicted by the control unit 16.

The motion experienced by marine vessels at sea is influenced by the interplay of forces and moments arising from both environmental disturbances, such as waves, wind, and sea current, and the marine vessel's maneuvering actions imposed by its propulsion system. A motion of the marine vessel 10 can manifest in 6 degrees of freedom (DOF), including linear motion components surge, sway, and heave, alongside angular marine vessel 10 motion components, including roll, pitch, and yaw. Hence, the forces and moments may also be characterized within this 6-DOF framework.

The forces and moments arising from the environmental disturbances may not always be favorable, as they can lead to undesirable ship motions. Specifically, smaller, and lighter vessels, as well as those using dynamic positioning (installation vessels, shuttle tankers, platform supply vessels, diving support vessels, ROV support vessels, drill ships, cable lay and repair vessels, pipe laying ships, offshore support vessels, rock dumping vessels, passenger vessels, among others) are more prone to sudden disturbances like rouge waves 56, wind gusts 54, sea current, and shallow waters. Rouge waves are defined as waves exceedingly twice the size of surrounding waves. Wind gusts are sudden changes (typically abrupt increases) in wind speed and direction.

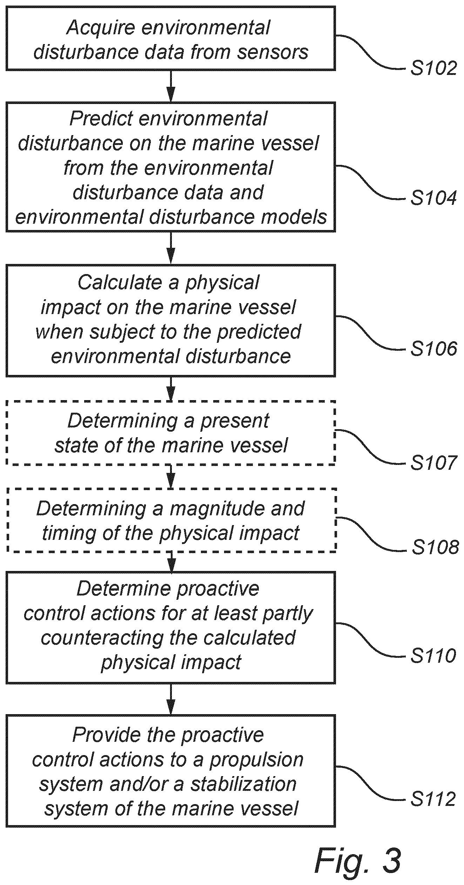

Fig. 3 is a flow-chart of method steps for proactive environmental disturbance rejection in marine vessels according to embodiments of the invention.

In step S102, acquiring environmental disturbance data 28, 31, 33 from sensors 26, 30, 32.

In step S104, predicting environmental disturbance on the marine vessel from the environmental disturbance data and environmental disturbance models. For example, camera 52 can be used to estimate the wave height h, propagation speed, and distance to the vessel by using a predictive model.

In step S106, calculating a physical impact on the marine vessel when subject to the predicted environmental disturbance. Calculating the physical impact may include calculating forces and moments on the marine vessel. The forces and moments are calculated as at least surge, sway, heave, and roll on the marine vessel 10. The environmental disturbance is predicted using a ship model, and different models for wind, sea current and wave impact. In this way, disturbance impacts i.e., forces and moments on the vessel 10 due to the rogue wave is estimated. Another example is the use of a wind LIDAR to predictively estimate forces and moments on the vessel due to wind gusts.

In step S110, determining proactive control actions for at least partly counteracting the calculated physical impact. The control actions may be determined to fully or entirely counteract the calculated physical impact depending on the marine vessel's current propulsion capability, and the specific maneuvering task being performed.

In step S112, providing the proactive control actions C to a propulsion system and/or a stabilization system of the marine vessel 10. That is, present control actions are adjusted and imposed on the propellers, via thruster allocation, and/or vessel stabilization systems such as active fin stabilizers, gyroscopic stabilizers, active trim tabs, anti-roll tanks, interceptors. Fast response to environmental disturbance is especially advantageous for fast propulsion technology like foil wheel propellers that can generate force almost instantly or with minimum delay. However, embodiments of the present disclosure are also applicable for other propellers like azipods allowing those enough time to react to sudden disturbances as the prediction will be available well in advance.

The proactive control actions C are provided to the propulsion system and/or the stabilization system of the marine vessel as feedforward control actions. That is, the environmental disturbance is detected before it hits the marine vessel 10, for example, use a camera to detect wave magnitude and frequency before the wave hits the vessel. With these predictions the control actions can be provided to timely counteract the disturbance once it reaches the marine vessel 10. This provides an advantage over the more traditional reactive approaches where disturbance is reacted to instead of being predicted and responding to in a proactive way. That is, existing prior art methods often rely on reactive control, where adjustments are made only after the vessel has already been affected by the disturbances. While reactive methods provide some level of compensation, they are often insufficient to fully counteract the negative effects of environmental forces, leading to delayed responses and suboptimal vessel performance. This is addressed by the herein proposed proactive environmental disturbance rejection method.

In some embodiments, a step S107 is included which comprises determining a present state, such as position and motion of the marine vessel 10.

In step S108, determining a magnitude and timing of the physical impact. Hereby, the proactive control actions are determined in step S112 based on the present state of the vessel in relation to the magnitude and timing of the physical impact. The state more precisely may include the heading angle, surge velocity, sway velocity, and yaw rate of the marine vessel 10.

The control of the vessel may include a feedback approach combined with the feedforward proactive control actions. The combination of feedback and feedforward control provides for a very efficient environmental disturbance rejection.

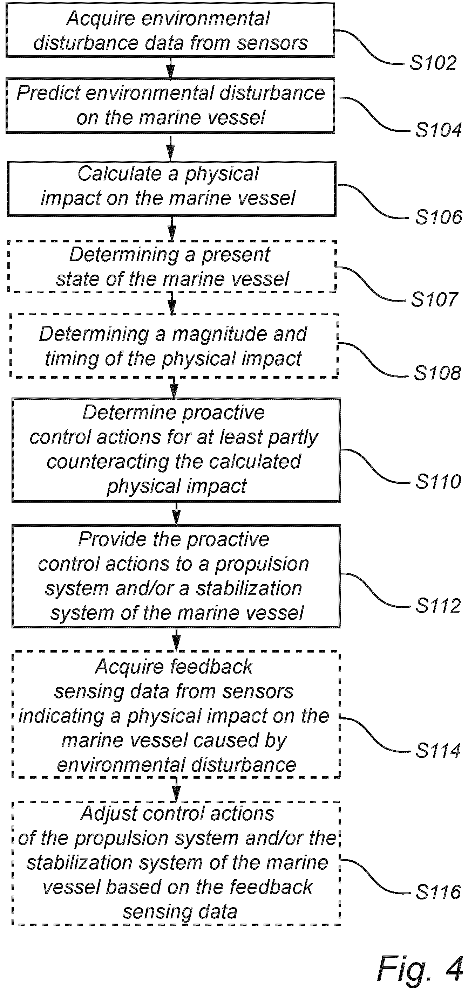

Fig. 4 is a flow-chart of method steps for environmental disturbance rejection in marine vessels according to embodiments of the invention including feedback control. In addition to the steps described above, the method may include the optional steps S114 of acquiring feedback sensing data from sensors 26, 30, 32 indicating a physical impact on the marine vessel 10 caused by environmental disturbance. The control unit 16 then, in step S116 adjusts control actions of the propulsion system and/or the stabilization system of the marine vessel based on the feedback sensing data. Note that the feedback approach may run in parallel with the proactive steps although the steps S1 14-S1 16 are here shown being subsequent to the initial steps. However, the proactive control actions respond to the predicted disturbance whereas the feedback control responds to when the environmental disturbance hits the marine vessel 10.

The proactive control actions may be determined based on a present objective of the marine vessel 10. For example, the marine vessel 10 may be following a predetermined path from a start position to a subsequent or final position. The objective may in other cases to maintain a present position. Determining the proactive control actions in step S110 may in this case include determining the proactive control actions such that an intended operational objective is at least partly maintained. That is, the proactive control action may account for that a present path is to be followed at a given speed. In some instances, the environmental disturbance may for example give additional speed but in the present heading of the marine vessel 10. In this case, the proactive control actions may take advantage of the assisting speed from the environmental disturbance and only ensure that a present heading is maintained.

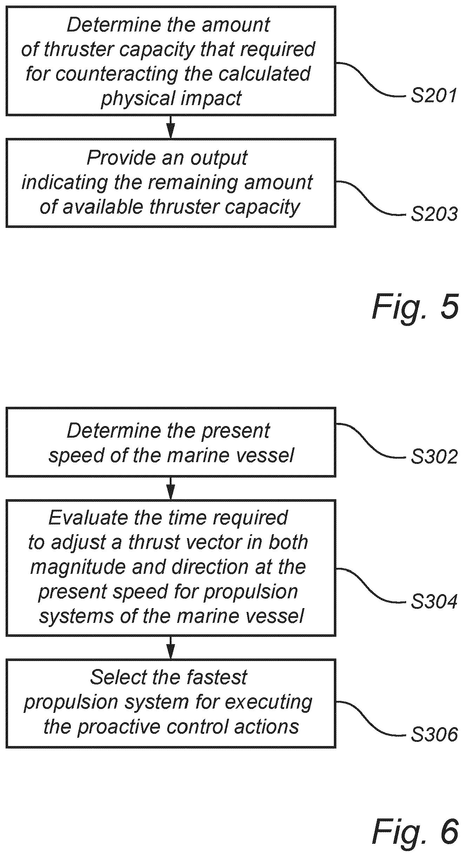

Fig 5 indicates further steps of embodiment of the present invention. In step S201, the control unit 16 determines the amount of thruster capacity that is required for counteracting the calculated physical impact. In steps S203, the control unit provides an output indicating the remaining amount of available thruster capacity. The output may be provided to the user interface 42. In other words, the marine vessel operator and/or autonomous systems of the marine vessel such as motion controller, path planner, and collision avoidance system are pre-informed about the proportion of thruster capabilities allocated for compensating for disturbances. This allows for a predetermined allocation of remaining capacity for maneuvering and path planning.

Fig. 6 indicates further steps of embodiment of the present invention.

Marine vessels 10 may include multiple propulsion technologies with different response times. The environmental disturbances are typically relatively fast and the response time of the propulsion technology becomes important.

Examples of very fast propulsion technologies are flapping wing propellers and cycloidal propellers.

Examples of fast propulsion technologies are azimuth thrusters, and tunnel thrusters.

Examples of slower or medium fast propulsion technologies are shaft propellers and ducted propellers.

In step S302, determining the present speed of the marine vessel 10.

In step S304, evaluating the time required to adjust a thrust vector in both magnitude and direction at the present speed for propulsion systems of the marine vessel.

In step S306, selecting the fastest propulsion system for executing the proactive control actions.

In other words, the propulsion systems are evaluated based on the time required to adjust the thrust vector in both magnitude and direction. These adjustments are made by altering operational parameters, such as rotational speed (RPM), angle of attack, or other controllable factors that influence thrust generation. Propulsion systems with faster response times, optimized for quicker and more precise adjustments, are selected to facilitate proactive control actions and improve vessel maneuverability.

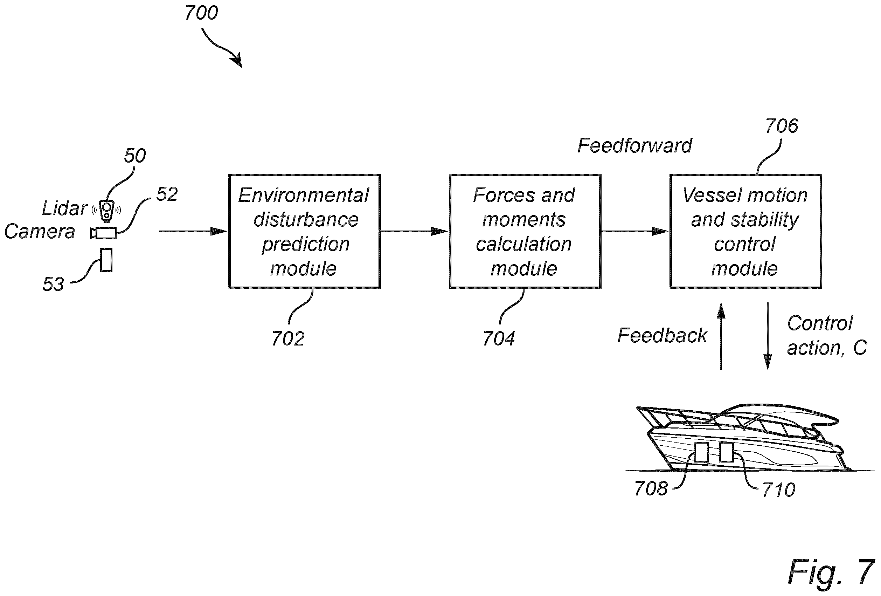

Fig 7 illustrates a system 700 for environmental disturbance rejection in marine vessels 10 according to an embodiment.

The system 700 comprises an environmental disturbance prediction module 702 configured to predict environmental disturbance on the marine vessel from environmental sensor data and environmental disturbance models. The sensor data may be provided from the sensors 50, 52, 53 as described above with reference to e.g., fig. 2.

The system 700 further comprises a physical impact calculation module 704 configured to receive environmental disturbance data from the environmental disturbance prediction module 702, and to calculate a physical impact on the marine vessel 10 when subject to the predicted environmental disturbance.

The system 700 further comprises a vessel motion and stability control module 706 configured to receive data of the calculated physical impact from the physical impact calculation module 704 as feedforward data. The vessel motion and stability control module 706 is configured to determine proactive control actions C for at least partly counteracting the calculated physical impact. The vessel motion and stability control module 706 provides the proactive control actions to a propulsion system 708 and/or a stabilization system 710 of the marine vessel.

The environmental disturbance prediction module 702 is configured to predict environmental disturbances such as rogue waves, wind gusts, and currents that a marine vessel 10 may encounter. The module 702 inputs real-time data from sensors, such as including camera, Radar, LIDAR, and differential pressure sensors, to predictive models to anticipate the occurrence and characteristics of the environmental disturbances such as the magnitude, direction, and timing of the environmental disturbances.

For example, in case of rouge wave, the height or amplitude, length, propagation speed and distance of the wave from the vessel 10 can be estimated either via image processing while using a camera or via LIDAR or via both using sensor fusion. The estimates are used to predict when the rogue wave will arrive to the vessel 10 with what height, length, propagation speed, etc. using mathematical models.

Additionally, the environmental disturbance prediction module 702 may be configured to estimate also the wave phase interaction with a vessel motion frequency for mitigating the rolling motion of the vessel to enhance vessel stability proactively.

For example, when a wave approaches a vessel 10, its impact on the vessel's roll motion depends not only on the wave's characteristics, such as height and speed, but also on its phase relative to the vessel's roll frequency. If the wave's phase aligns with the vessel's roll frequency, it can amplify the roll motion, potentially leading to uncomfortable or even dangerous conditions. This phenomenon is known as resonant roll or synchronous rolling, where the energy from the wave is absorbed by the vessel 10, increasing its roll amplitude.

Conversely, if the wave phase is out of sync with the vessel's roll motion, it can effectively cancel out the roll, reducing the overall motion. By estimating the wave phase with respect to the vessel's roll motion, the prediction module 702 can assess whether an incoming wave will amplify or diminish the roll. The environmental disturbance prediction module 702 employs dynamic roll estimation techniques to account for the constantly changing conditions at sea, such as varying wave heights, directions, and vessel speeds. Therefore, the environmental disturbance prediction module 702 is configured to operate dynamic roll estimation techniques i.e., dynamic response amplitude operators, numerical simulation, time-domain simulation, machine learning, Kalman filtering, etc. using the real-time data from sensors 50, 52, 53 as input. This allows the vessel's stability and motion control systems 706 to adjust in advance, either by activating stabilizers or altering the vessel's speed and heading (if needed) to minimize the impact. This enables the vessel 10 to not only react to environmental conditions but also anticipate and prepare for them, leading to more efficient and effective stabilization strategies.

Moreover, a way of representing wave is the "wave spectral density", also known as "wave energy spectrum", where a particular measure of the wave height is represented based on its angular frequency. Different estimation techniques may be used for wave predictions. However, Bayesian techniques are often preferred as they offer more flexibility and few constraints and assumptions about the wave. The estimates from physical sensors i.e., camera, Radar, LIDAR, etc. can be used for updating Bayesian estimates providing prediction with higher confidence.

By providing these predictions, the environmental disturbance prediction module 702 enables the vessel's control systems to proactively adjust their responses, enhancing the vessel's ability to maintain stability and desired motion paths despite the presence of adverse environmental conditions.

The physical impact calculation module 704 is arranged to translate the predicted environmental disturbances into specific forces and moments that will impact the vessel 10. The physical impact calculation module 704 may operate within a six degrees of freedom (6-DOF) framework, and calculates the expected forces (surge, sway, and heave) and moments (roll, pitch, and yaw) that the vessel 10 will experience due to the anticipated environmental conditions. Using the input from the environmental disturbance prediction module 702, the physical impact calculation module 704 determines the impact of predicted disturbances on the vessel's dynamics, enabling the control systems 708, 710 to counteract the disturbances.

The vessel motion and stability control module 706 integrates the information provided by the environmental disturbance prediction module 702 and the physical impact calculation module 704 to maintain vessel stability and desired objective such as a motion path. This module vessel motion and stability control module 706 may use a combination of feedforward and feedback control strategies to adjust the vessel's propulsion 708 and stabilization systems 710 proactively. Using the predicted environmental disturbance, the module 706 can pre-emptively allocate thruster capabilities and adjust control actions, ensuring the vessel can maintain its position and course even under challenging environmental conditions.

The herein described proactive approach, particularly when combined with fast-reacting propulsion technologies, significantly enhances the vessel's ability to reject disturbances, thereby improving passenger comfort and operational efficiency in dynamic positioning and other critical maritime operations. The proactive approach may also be beneficial for slower propulsion systems, like azipods, by providing ample time to respond to sudden disturbances, as predictions will be available well in advance. For actuators with longer delay times, control can be effectively managed through a reference generator, allowing the propulsion system 708 or stabilization system 710 to gradually converge towards the desired reference point.

To ensure effective and smooth control of ship thrusters, the propulsion capabilities and response rates of the thrusters are carefully integrated. The total force and torque that the thrusters need to generate may be determined by combining two components: (1) feed-forward control actions that account for environmental disturbances, and (2) control actions necessary for executing the desired motion control tasks. This problem is formulated as a constrained optimization problem, specifically a Quadratic Programming (QP) problem, to ensure that the requested force and torque are within the feasible limits of the thrusters. By solving this optimization problem, smooth maneuvering is achieved, and the vessel can effectively compensate for environmental disturbances.

The objective function in the optimization problem minimizes the deviation from the combined feed-forward control and motion control values. This guides the optimization algorithm to find the closest feasible force and torque that can simultaneously handle both the motion control tasks and disturbance compensation. The constraints of the optimization problem may be twofold: (1) the feasible forces that can be generated by the vessel's thrusters, representing their propulsion capabilities, and (2) the rate limits of the thrusters, which restrict how quickly thrust can be adjusted. These constraints ensure that the total force remains within the thrusters' capabilities and that the rate of change is not too abrupt, preventing uncomfortable or unstable compensation for disturbances. The rate limits of the thrusters ensure that disturbance compensation is automatically adjusted to the specific type of vessel thruster. For example, foil-wheel propellers, which have a faster response time, provide quicker compensation compared to Azipods.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method for proactive environmental disturbance rejection in marine vessels (10), comprising:
acquiring (S102) environmental disturbance data (28, 31, 33) from sensors (26, 30, 32),
predicting (S104) environmental disturbance on the marine vessel from the environmental disturbance data and environmental disturbance models (19),
calculating (S106) a physical impact on the marine vessel (10) when subject to the predicted environmental disturbance,
determining (S108) proactive control actions for at least partly counteracting the calculated physical impact,
providing (S110) the proactive control actions (C) to a propulsion system (12, 708) and/or a stabilization system (49, 710) of the marine vessel.

2. The method of claim 1, further comprising:
determining (S107) a present state of the marine vessel,
determining a magnitude and timing of the physical impact, wherein the proactive control actions are determined based on the present state of the vessel in relation to the magnitude and timing of the physical impact.

3. The method of any of claims 1-2, wherein the proactive control actions are provided to the propulsion system (12, 708) and/or the stabilization system (49, 710) of the marine vessel as feedforward control actions.

4. The method of claim 3, comprising,
acquiring (S114) feedback sensing data from sensors indicating a physical impact on the marine vessel caused by environmental disturbance, and
adjusting (S116) control actions of the propulsion system and/or the stabilization system of the marine vessel based on the feedback sensing data.

5. The method of any of claims 1-4, comprising:
determining (S201) the amount of thruster capacity that required for counteracting the calculated physical impact, and
providing (S203) an output indicating the remaining amount of available thruster capacity.

6. The method of any of claims 1-5, comprising:
acquiring operational objective data for the marine vessel, and
determining the proactive control actions such that an intended operational objective is at least partly maintained.

7. The method of any of claims 1-6, comprising:
determining (S302) the present speed of the marine vessel,
evaluating (S304) the time required to adjust a thrust vector in both magnitude and direction at the present speed for propulsion systems of the marine vessel,
selecting (S306) the fastest propulsion system for executing the proactive control actions within the time required to adjust the thrust vector.

8. The method of any of claims 1-7, the proactive control actions include altering rotational speed (RPM), angle of attack, or other controllable factors of a thruster, fin stabilizer, or both, as part of the propulsion system and/or stabilization system.

9. The method of any of claims 1-8, wherein calculating the physical impact includes calculating forces and moments on the marine vessel.

10. The method of claim 9, wherein the forces and moments are calculated as at least surge, sway, heave, and roll on the marine vessel.

11. The method of any of claims 1-10, wherein environmental disturbance includes one or more of wind, sea current, and waves.

12. A control unit (16) configured to execute the method of any one of the preceding claims.

13. A system (700) for proactive environmental disturbance rejection in marine vessels, comprising:
an environmental disturbance prediction module (702) configured to predict environmental disturbance on the marine vessel from sensor data and environmental disturbance models,
a physical impact calculation module (704) configured to receive environmental disturbance data from the environmental disturbance prediction module (702), and to calculate a physical impact on the marine vessel when subject to the predicted environmental disturbance,
a vessel motion and stability control module (706) configured to receive data of the calculated physical impact from the physical impact calculation module (704) as feedforward data, the vessel motion and stability control module being configured to determine proactive control actions (C) for at least partly counteracting the calculated physical impact, and to provide the proactive control actions to a propulsion system (708) and/or a stabilization system (710) of the marine vessel.

14. A marine vessel (10) comprising a control unit (16) according to claim 12 and/or a system according to claim 13.

15. A computer program product (20) comprising program code for performing the method according to any one of claims 1-12, when executed by a control unit.
